(19) Europäisches Patentamt
European Patent Office
Office européen des brevets

(11) Veröffentlichungsnummer: **0 357 915 B1**

(12) **EUROPÄISCHE PATENTSCHRIFT**

(45) Veröffentlichungstag der Patentschrift: **28.04.93**

(51) Int. Cl.5: **C09B 62/09**, C09B 62/513, D06P 1/38

(21) Anmeldenummer: **89113102.1**

(22) Anmeldetag: **18.07.89**

Die Akte enthält technische Angaben, die nach dem Eingang der Anmeldung eingereicht wurden und die nicht in dieser Patentschrift enthalten sind.

(54) **Disazoreaktivfarbstoffe.**

(30) Priorität: **30.07.88 DE 3826060**
**01.10.88 DE 3833380**

(43) Veröffentlichungstag der Anmeldung:
**14.03.90 Patentblatt 90/11**

(45) Bekanntmachung des Hinweises auf die Patenterteilung:
**28.04.93 Patentblatt 93/17**

(84) Benannte Vertragsstaaten:
**CH DE FR GB LI**

(56) Entgegenhaltungen:
**GB-A- 766 015**

**CHEMICAL ABSTRACTS, Band 106, Nr. 6, Februar 1987, Seite 88, Zusammenfassung Nr. 34632e, Columbus, Ohio, US; & JP-A-61 200 174 (MITSUBISHI CHEMICAL INDUSTRIES CO., LTD) 04-09-1986**

**CHEMICAL ABSTRACTS, Band 107, Nr. 14, Oktober 1987, Seite 70, Zusammenfassung Nr. 116954w, Columbus, Ohio, US; & JP-A-62 84 160 (MITSUBISHI CHEMICAL INDUSTRIES CO., LTD) 17-04-1987**

(73) Patentinhaber: **BAYER AG**

**W-5090 Leverkusen 1 Bayerwerk(DE)**

(72) Erfinder: **Jäger, Horst, Dr.**
**Carl-Rumpff-Strasse 37**
**W-5090 Leverkusen(DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



Rank Xerox (UK) Business Services
(3.10/3.5x/3.0.1)

## Beschreibung

Die vorliegende Erfindung betrifft neue Reaktivfarbstoffe.

Aus JP-A- 61 200 174 sind bereits Disazofarbstoffe mit einem Triazinreaktivrest bekannt, die aber anwendungstechnische Nachteile aufweisen.

Gegenstand der vorliegenden Erfindung sind Disazoreaktivfarbstoffe der allgemeinen Formel

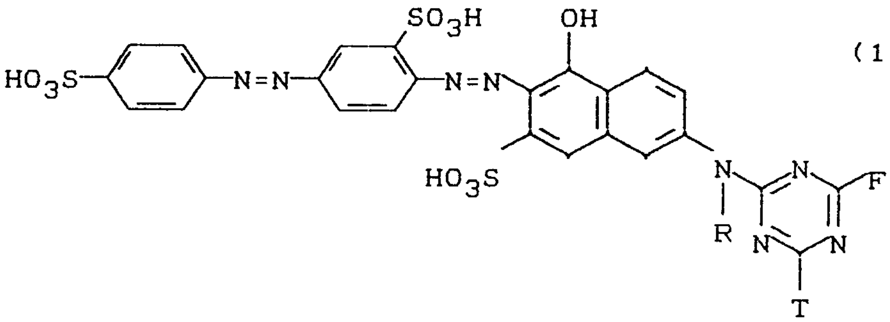

(1),

worin

R = H oder $CH_3$

T =

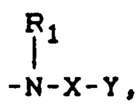

,

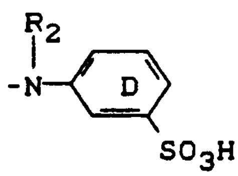

,

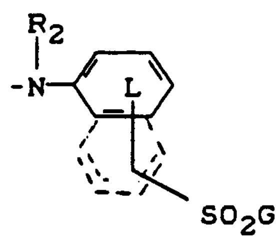

oder

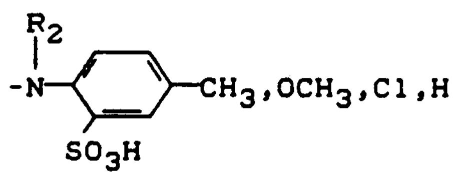

worin

$R_1$ = H, gegebenenfalls substituiertes $C_1$-$C_4$-Alkyl oder -X-Y

X = zweiwertiger aliphatischer, cycloaliphatischer, aliphatisch-cycloaliphatischer Rest oder araliphatischer Rest

Y = COOH, $SO_3H$, $OSO_3H$ oder $SO_2G$, wobei

G = $CH{=}CH_2$ oder $-CH_2-CH_2-Z$, wobei Z eine unter alkalischen Bedingungen abspaltbare Gruppe bedeutet

$R_2$ = H oder $C_1$-$C_4$-Alkyl und worin der Benzolrest D und der Benzol- bzw. Naphtalinrest L übliche Substituenten enthalten können.

Der Alkylrest $R_1$ kann geradkettig oder verzweigt sein. Beispiele für Substituenten von $R_1$ sind OH, $OCH_3$, $OC_2H_5$, Cl, CN. Geeignete Reste $R_1$ sind beispielsweise $-CH_3$, $-C_2H_5$, $-n-C_3H_7$, $-iso-C_3H_7$, $-(CH_2)_2-OH$, $-(CH_2)_2-Cl$, $-(CH_2)_2-CN$.

Die zweiwertigen Reste X können Heteroatome oder Heteroatomgruppierungen enthalten, beispielsweise:

-O-, -S-,

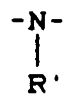

(wobei R′ = H oder $C_1$-$C_4$-Alkyl),

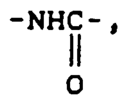

$-SO_2-$.

Geeignete Reste X sind beispielsweise:

$-(CH_2)_{1-6}$,

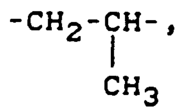 , 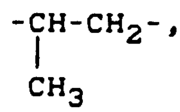

$-CH_2-CH_2-O-CH_2-CH_2-$, $-CH_2-CH_2-S-CH_2-CH_2-$,

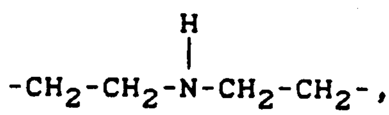

$-CH_2-CH_2-NHCOCH_2CH_2-$, $-CH_2-CH_2-NHCO-CH=CH-$, $-CH_2-CH_2-SO_2-CH_2-CH_2-$, $-CH_2-CH_2-O-CH_2-CH_2-SO_2-CH_2-CH_2-$

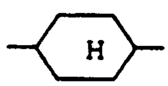 , 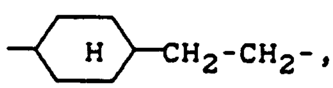

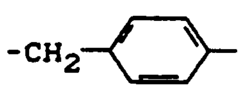 , 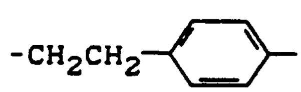

Beispiele Z sind

$OSO_3H$, $S_2O_3H$,

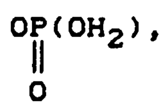

Cl, $OSO_2CH_3$,

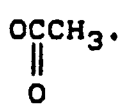

Beispiele für Substituenten der Ringe D und L sind die folgenden:
Cl, Br, $CH_3$, $C_2H_5$, $OCH_3$, $OC_2H_5$, COOH, $SO_3H$, $NO_2$, $NH_2$, $NHCH_3$, $NHCH_2CH_2OH$, $NHCH_2CH_2OSO_3H$.

Im Rahmen der Formel (1) sind ganz generell Farbstoffe bevorzugt, in denen R und $R_2$ für H und G für - CH = $CH_2$ oder - $CH_2$-$CH_2OSO_3H$ steht.

Weiterhin sind Farbstoffe (1) bevorzugt, in denen

T = $T_1$, wobei $T_1$ =

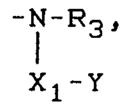

worin

$R_3$ = -H, -$C_1$-$C_4$-Alkyl, -$X_1$-Y

$X_1$ = zweiwertiger, höchstens 6-C-Atome enthaltender aliphatischer Rest, der -O-, -S-,

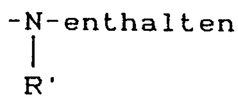

kann,

wobei R' = H oder $C_1$-$C_4$-Alkyl.

Für Y = COOH, $SO_3H$, $OSO_3H$ ist $X_1$ bevorzugt -$CH_2$-, -$CH_2$-$CH_2$-,

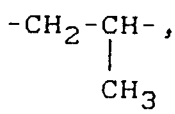

Für Y = $SO_2G$ ist $X_1$ bevorzugt -$CH_2$-$CH_2$-, -$CH_2$-$CH_2$-O-$CH_2$-$CH_2$-.

Gegenstand der Erfindung sind weiterhin Verfahren zur Herstellung der Farbstoffe der Formel (1).

1.) Ein Disazofarbstoff der Formel

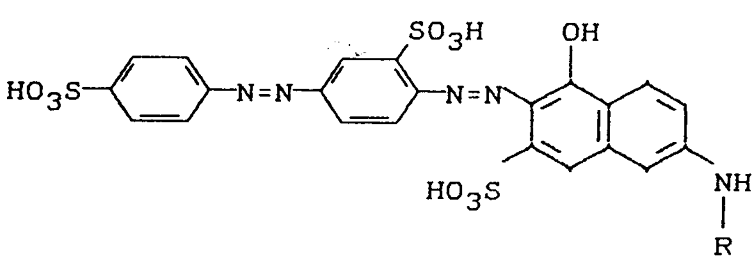

(2)

wird zunächst mit 2,4,6-Trifluortriazin unter Abspaltung von Flußsäure kondensiert und die resultierende Difluorverbindung mit einem Amin der Formel

H-T (3)

unter Abspaltung von Flußsäure zu einem Farbstoff der Formel (1) umgesetzt.

2.) Ein Aminohydroxynaphtalinsulfonsäure der Formel (4)

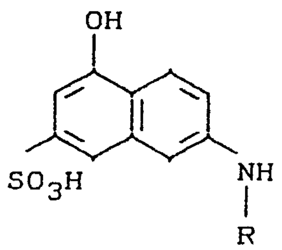

(4)

wird mit 2,4,6-Trifluortriazin kondensiert unter Abspaltung von Flußsäure und die resultierende Difluorverbindung mit einem Amin der Formel (3) umgesetzt. Die dabei erhaltene Kupplungskomponente der Formel

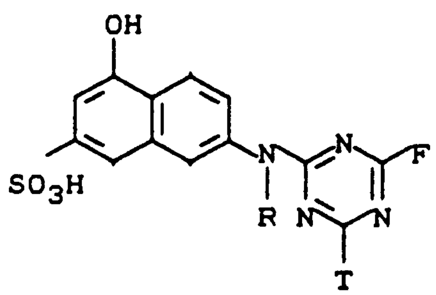

(5)

wird mit dem diazotierten Amin der Formel

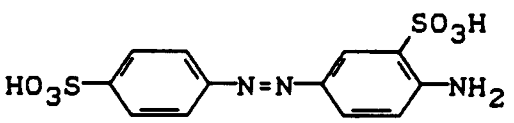

(6)

zu einem Farbstoff (1) gekuppelt.

3.) Ein Amin der Formel (3) wird mit 2,4,6-Trifluortriazin unter Abspaltung von Flußsäure zu einer Difluorverbindung der Formel (7)

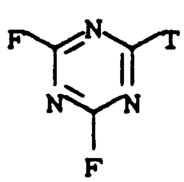

(7)

kondensiert und diese mit einer Kupplungskomponente der Formel (4) zu einer Verbindung der Formel (5) unter Abspaltung von Flußsäure umgesetzt und diese anschließend mit der Diazokomponente (6) gekuppelt.

Die Kondensation der Verbindungen der Formel (2), (3) und (4) mit dem 2,4,6-Trifluortriazin erfolgt vorzugsweise in wäßriger Lösung oder Suspension bei niedriger Temperatur und vorzugsweise bei etwa 0 °C und bei schwach saurem, neutralem bis schwach alkalischem pH. Der freiwerdende Fluorwasserstoff wird durch Zugabe wäßriger Alkalihydroxide, -carbonate oder -bicarbonate abgestumpft. Die Umsetzung der Difluorverbindungen mit den entsprechenden Reaktionspartner erfolgt ebenfalls vorzugsweise in wäßriger Lösung der Suspension bei niedriger Temperatur, vorzugsweise bei 0 bis 20 °C, und bei schwach saurem bis schwach alkalischem pH.

Der bei der Kondensation von (2), (3) und (4) mit Trifluortriazin freiwerdende Fluorwasserstoff wird generell bevorzugt durch Li-Basen, beispielsweise LiOH abgefangen.

Die Farbstoffe der Formel (2) erhält man durch Kupplung des diazotierten Amins der Formel (6) mit den N-acylierten Kupplungskomponenten der Formel (4) im schwach sauren bis schwach alkalischen Bereich . Der Acylrest wird anschließend durch Erhitzen mit Säuren oder Laugen abgespalten. Beispiele für einen Acylrest sind Acetyl oder Carbamoyl.

Kupplungskomponenten der Formel (4) sind:
1-Hydroxy-6-aminonaphtalin-3-sulfonsäure und 1-Hydroxy-6-methyl-amino-naphthalin-3-sulfonsäure.

Beispiele für Amine der Formel (3) sind für H-T =

$R_1$
|
H-N-X-Y (3a)

die folgenden:

H-N-$CH_3$ | $CH_2SO_3H$ , H-N-H | $CH_2CH_2SO_3H$ , H-N-$CH_3$ | $CH_2CH_2SO_3H$ , H-N-$C_2H_5$ | $CH_2SO_3H$

H-NH | $CH_2CH_2OSO_3H$ , H-$NCH_3$ | $CH_2CH_2OSO_3H$ , H-NH | $CH_2COOH$

H-N-$CH_3$ | $CH_2COOH$ , H-NH | $CH_2CH_2COOH$ , H-N-$CH_3$ | $CH_2CH_2COOH$

H-NH | $CH_2CH_2NHCOCH_2CH_2COOH$ , H-NH | $CH_2CH_2NHCOCH{=}CH{-}COOH$ ,

H-NH | $CH_2CH_2OCH_2CH_2OSO_3H$ , H-NH | $CH_2CH_2SO_2CH_2CH_2OSO_3H$ ,

H-NH | $CH_2CH_2OCH_2CHSO_2CH_2CH_2OSO_3H$ , H-N-$CH_2CH_2OSO_3H$ | $CH_2CH_2OSO_3H$

HN-$CH_2CH_2SO_2CH_2CH_2OSO_3H$ | $CH_2CH_2SO_2CH_2CH_2OSO_3H$ , H-NH | $CH_2CH_2OCH_2CH_2SO_2CH_2CH_2Cl$

Beispiele für Amine der Formel (3) für H-T =

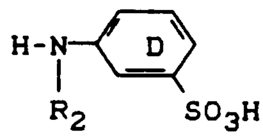

(3 b)

sind folgende:
1-Aminobenzol-3-sulfonsäure
1-Amino-4-chlor-benzol-3-sulfonsäure
1-Amino-4-methyl-benzol-3-sulfonsäure
1-Amino-4-methoxy-benzol-3-sulfonsäure
1-Amino-4-ethoxy-benzol-3-sulfonsäure
1-Amino-2-methyl-benzol-5-sulfonsäure
1-Amino-2-chlor-benzol-5-sulfonsäure
1-Amino-2-methoxy-benzol-5-sulfonsäure
1-Aminobenzol-2,5-disulfonsäure
1-Amino-2,4-dimethoxy-benzol-5-sulfonsäure
1-N-Ethyl-aminobenzol-3-sulfonsäure
Beispiele für Amine (3) für H-T =

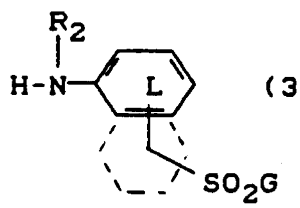

(3 c)

sind folgende:
1-Aminobenzol-2-, -3- oder -4-ß-sulfatoethylsulfon,
1-Aminobenzol-3-ß-phosphatoethylsulfon, 1-Amino-4-methylbenzol-3-ß-sulfatoethylsulfon, 1-Aminobenzol-3-ß-chlorethylsulfon, 1-Amino-4-methoxybenzol-3-ß-sulfatoethylsulfon,
1-Aminobenzol-4-ß-sulfatoethylsulfon-2-sulfonsäure,
1-Aminobenzol-5-ß-sulfatoethylsulfon-2-sulfonsäure,
1-Aminobenzol-5-ß-sulfatoethylsulfon-2,4-disulfonsäure,
1-Aminonaphthalin-4-ß-sulfatoethylsulfon,
1-Amino-2,5-dimethoxybenzol-4-ß-sulfatoethylsulfon,
1-Aminobenzol-4-ß-sulfatoethylsulfon-2-carbonsäure,
1-Aminobenzol-5-ß-sulfatoethylsulfon-2-carbonsäure,
1-Amino-2-methoxybenzol-4-ß-sulfatoethylsulfon,
1-Amino-2-chlorbenzol-4-ß-sulfatoethylsulfon,
1-Amino-2-methoxybenzol-5-ß-sulfatoethylsulfon,
2-Aminonaphthalin-8-ß-sulfatoethylsulfon,
2-Aminonaphthalin-8-ß-sulfatoethylsulfon-6-sulfonsäure,
1-Amino-2,5-dimethoxybenzol-4-vinylsulfon,
1-Amino-2-methoxy-5-methylbenzol-4-ß-sulfatoethylsulfon,
1-Amino-2,5-diethoxybenzol-4-ß-sulfatoethylsulfon,
1-Amino-2-brombenzol-4-ß-sulfatoethylsulfon,
1-Amino-2-brombenzol-4-vinylsulfon,
1-Aminobenzol-5-vinylsulfon-2,4-disulfonsäure,
1-Aminobenzol-5-ß-phosphatoethylsulfon-2,4-disulfonsäure,
1-Aminobenzol-5-ß-chlorethylsulfon-2,4-disulfonsäure,
2-Aminonaphthalin-8-ß-phosphatoethylsulfon-6-sulfonsäure,
2-Aminonaphthalin-8-vinylsulfon-6-sulfonsäure,

1-Amino-2-methoxy-5-methylbenzol-4-ß-chlorethylsulfon,
2-Aminophenol-4-ß-sulfatoethylsulfon,
1-Aminobenzol-3- oder -4-vinylsulfon,
1-Amino-2-hydroxybenzol-4-ß-sulfatoethylsulfon,
1-Aminobenzol-5-vinylsulfon-2-sulfonsäure,
2-Aminonaphthalin-6,8-di-ß-sulfatoethylsulfon,
2-Aminonaphthalin-6-ß-sulfatoethylsulfon-8-sulfonsäure,
2-Aminophthalin-4,8-di-ß-sulfatoethylsulfon,
1-Aminobenzol-3,4-di-ß-sulfatoethylsulfon,

Gegenstand der Erfindung sind auch die Lithiumsalze der Formel

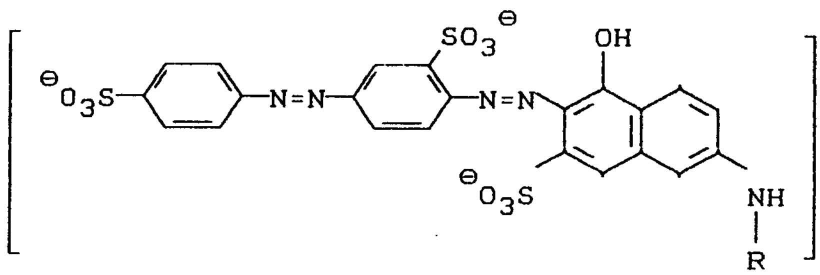

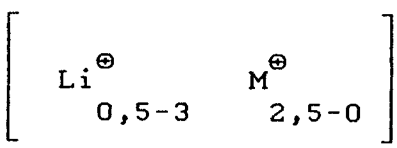

(8)

wobei $M^{\oplus}$ = $Na^{\oplus}$ oder $K^{\oplus}$
wobei $\Sigma$ $Li^{\oplus}$ + $M^{\oplus}$ = 3
wobei R die oben angegebene Bedeutung hat.

Dabei können die Kationen $M^{\oplus}$ gleich oder verschieden sein.

Die Salze der Formel (8) erhält man durch Umsetzung der Verbindungen

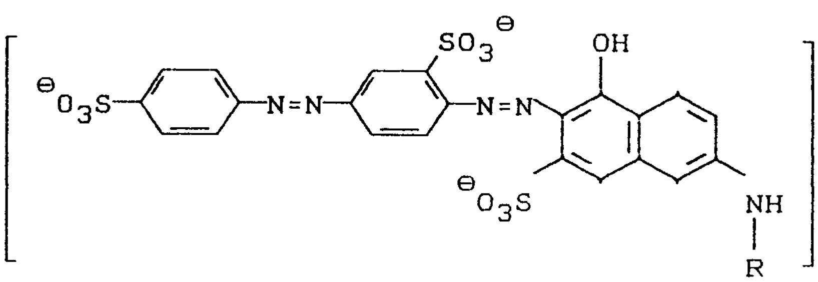

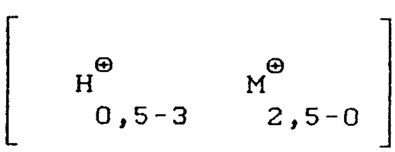

(9)

wobei $\Sigma$ $H^{\oplus}$ + $M^{\oplus}$ = 3
mit 0,5 - 3 Äquivalenten einer Lithium-Base.

Für die Acylierung zu den Reaktivfarbstoffen der Formel (1) erweist sich die Verwendung der Lithiumsalze (8) als besonders günstig.

In den Farbstoffen der Formel (8) und (9) bedeutet R bevorzugt Wasserstoff.

Die neuen Farbstoffe geben auf Cellulose- sowie natürlichen synthetischen Polyamidmaterialien klare Färbungen. Sie zeichnen sich durch hohe Farbstärke aus.

Als wasserlösliche Reaktivfarbstoffe finden die neuen Farbstoffe bevorzugtes Interesse für das Färben von hydroxyl- und amidgruppenhaltigen Textilmaterialien, insbesondere von Materialien aus nativer und regenerierter Cellulose sowie synthetischen Polyamid- und Polyurethanfasern, Wolle und Seide.

Die genannten Materialien werden nach den für wasserlösliche Reaktivfarbstoffe allgemein bekannten und in der Technik üblichen Verfahren gefärbt oder bedruckt. Man erhält dann licht- und naßechte brillante Färbungen und Drucke.

Bei den Temperaturangaben in den Beispielen handelt es sich um °C. Die Formeln der wasserlöslichen Reaktivfarbstoffe in der Beschreibung und in den Beispielen sind die der freien Säuren. Isoliert und angewandt werden die Farbstoffe im allgemeinen in Form ihrer Akalisalze, insbesondere der Lithium-, Natrium- oder Kaliumsalze.

Die in den Beispielen angegebenen Farbkennzahlen beziehen sich auf Colour Index Hue Indication Chart (Indicator Numbers).

Beispiel 1

0,1 mol des Farbstoffes der Formel

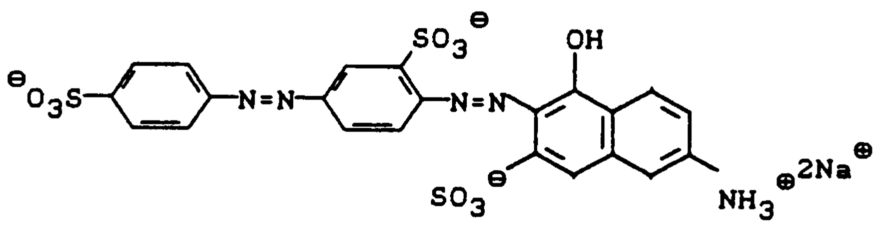

werden in 1 l Wasser angerührt und durch Zugabe von 0,1 mol LiOH neutral gelöst. Man wirft dann 500 g Eis ein und tropft anschließend 13,5 g Trifluortriazin zu, wobei die freiwerdende Flußsäure durch LiOH-Lösung abgestumpft wird. Nach beendeter Kondensation läßt man 0,1 mol N-Methyltaurin in wäßriger Lösung einlaufen. Der Austausch des zweiten Fluoratom erfolgt bei pH 8,5-9 und 0° bis 5°, wobei gleichfalls die freiwerdene Flußsäure durch Lithiumhydroxid neutralisiert wird. Der Farbstoff wird durch Aussalzen mit 25 Volumenprozent Kaliumchlorid abgeschieden. Nach dem Absaugen, Trocknen und Mahlen erhält man ein in Wasser leicht lösliches rotes Farbstoffpulver.

Der Farbstoff entspricht in Form der freien Säure der Formel

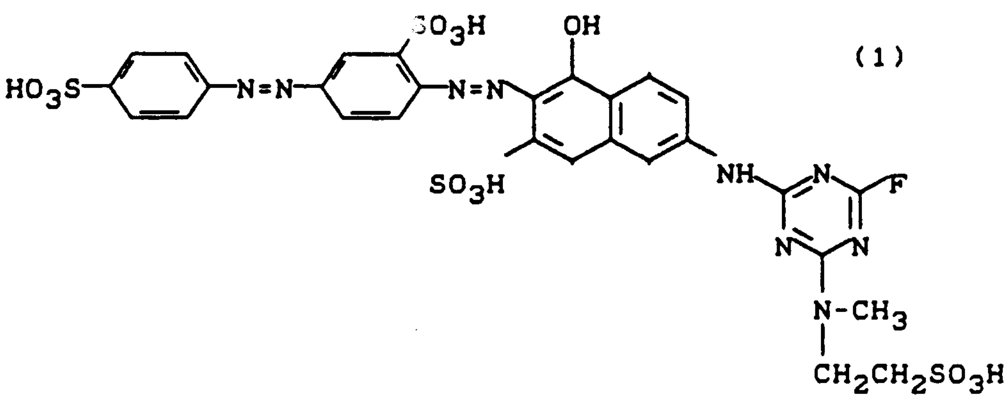

(1)

Er färbt Baumwolle nach einem der für Reaktivfarbstoffen üblichen Verfahren in klaren gelbstichig roten Tönen (Farbkennzahl 7).

Ersetzt man in diesem Beispiel N-Methyltaurin durch die in Tabelle 1 genannten Amine, so erhält man gleichfalls gut wasserlösliche Reaktivfarbstoffe, die Baumwolle gelbstichig rot färben.

Tabelle 1

| Beispiel | Amin |
|---|---|
| 1 | $H_2N-CH_2-CH_2-NHCO-CH_2-CH_2-COOH$ |
| 2 | Methylaminomethansulfonsäure |
| 3 | Ethylaminomethansulfonsäure |
| 4 | Taurin |
| 5 | Aminoessigsäure |
| 6 | Methylaminoessigsäure |
| 7 | Aminoethylsulfat = $\beta$-Sulfatoethylamin |
| 8 | N-Methyl-N-$\beta$-sulfatoethylamin |
| 9 | $\beta$-Sulfatoethyl-$\beta$'-aminoethyl-sulfon |
| 10 | $\beta$-Sulfatoethyl-$\beta$'-sulfatoethyl-amin |
| 11 | $\beta$-Aminopropionsäure |
| 12 | $\delta$-Aminobutansulfonsäure |
| 13 | $H_2N-CH_2-CH_2-O-CH_2-CH_2-SO_2-CH_2-CH_2-OSO_3H$ |
| 14 | $H_2N-CH_2-CH_2-O-CH_2-CH_2-SO_2-CH_2-CH_2-Cl$ |

Gleichfalls wertvolle Farbstoffe erhält man, wenn man von dem nachfolgend aufgeführten Aminodisazofarbstoff ausgeht und die im Beispiel 1 und in der Tabelle 1 verwendeten Amine für den Austausch des zweiten Fluoratoms einsetzt.

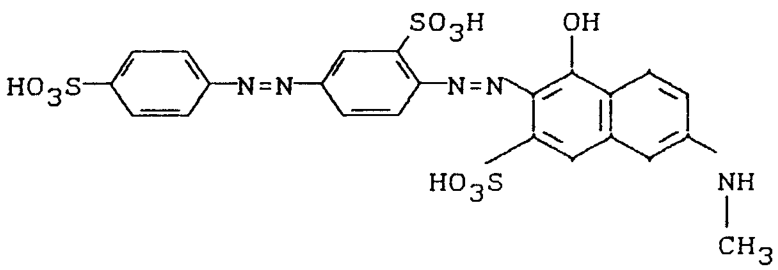

Beispiel 2

0,1 mol des Farbstoffs der Formel

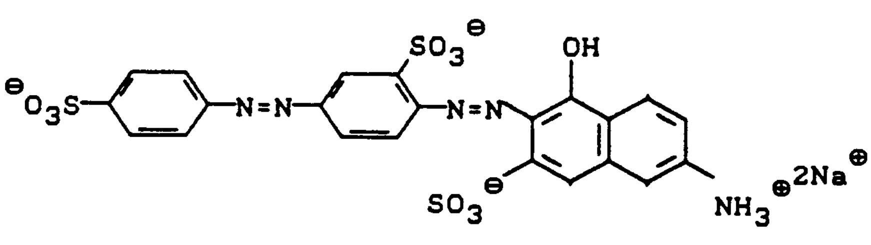

werden in 1 l Wasser angerührt und durch Zugabe von 0,1 mol LiOH neutral gelöst. Man wirft dann 500 g Eis ein und tropft anschließend 13,5 g Trifluortriazin zu, wobei die freiwerdende Flußsäure durch LiOH-Lösung abgestumpft wird. Nach beendeter Kondensation läßt man 0,1 mol m-Sulfanilsäure in wäßriger Lösung einlaufen. Der Austausch des zweiten Fluoratom erfolgt bei pH 6-7 und 0° bis 15°, wobei gleichfalls die freiwerdende Flußsäure durch Lithiumhydroxid neutralisiert wird. Der Farbstoff wird durch Aussalzen mit 10 Volumenprozent Natriumchlorid abgeschieden. Nach dem Absaugen, Trocknen und Mahlen erhält man ein in Wasser leicht lösliches rotes Farbstoffpulver.

Der Farbstoff entspricht in Form der freien Säure der Formel

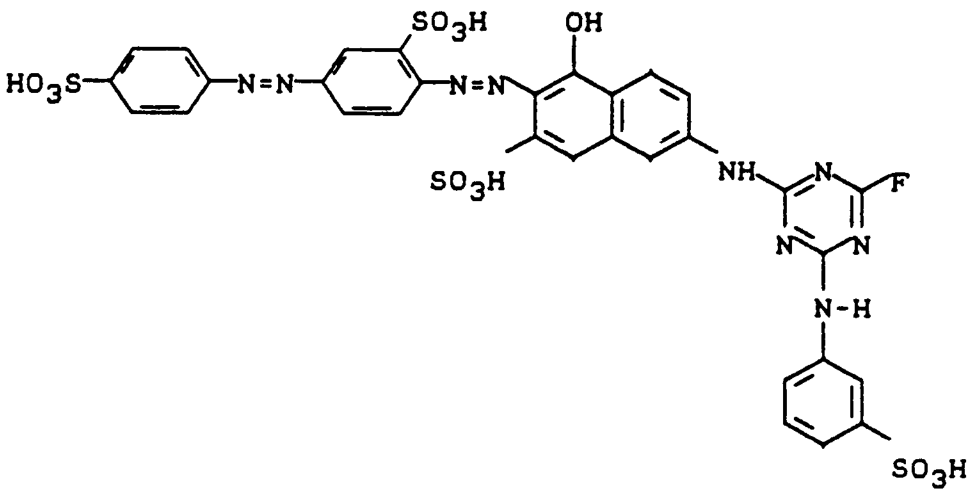

Er färbt Baumwolle nach einem der für Reaktivfarbstoffen üblichen Verfahren in klaren gelbstichig roten Tönen (Farbkennzahl 7).

Ersetzt man in diesem Beispiel 2 die m-Sulfanilsäure durch die in Tabelle 2 genannten Amine, so erhält man gleichfalls gut wasserlösliche Reaktivfarbstoffe, die Baumwolle gelbstichig rot färben.

**Tabelle 2**

**Amine der Formel**

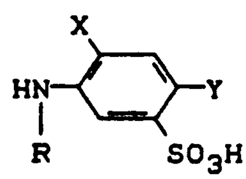

| Beispiel | X | Y | R |
|---|---|---|---|
| 1 | H | Cl | H |
| 2 | H | $CH_3$ | H |
| 3 | H | $OCH_3$ | H |
| 4 | Cl | H | H |
| 5 | $CH_3$ | H | H |
| 6 | $OCH_3$ | H | H |
| 7 | H | H | $CH_3$ |
| 8 | $SO_3H$ | H | H |

Gleichfalls wertvolle Farbstoffe erhält man, wenn man von dem nachfolgend aufgeführten Aminodisazofarbstoff ausgeht und die im Beispiel 2 und in der Tabelle 2 verwendeten Amine für den Austausch des

zweiten Fluoratoms einsetzt

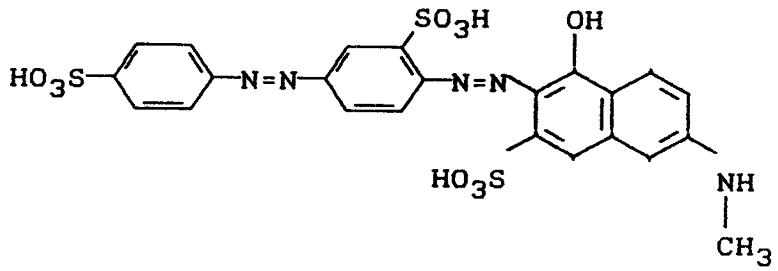

Farbton auf Baumwolle gelbstichig rot (Farbkennzahl 7)

Beispiel 3

0,1 mol des Farbstoffs der Formel

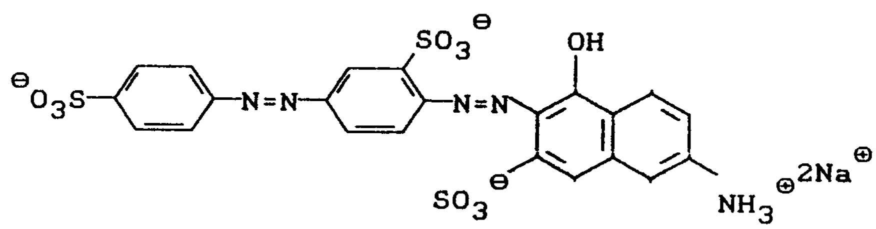

werden in 1 l Wasser angerührt und durch Zugabe von 0,1 mol LiOH neutral gelöst. Man wirft dann 500 g Eis ein und tropft anschließend 13,5 g Trifluortriazin zu, wobei die freiwerdende Flußsäure durch LiOH-Lösung abgestumpft wird. Nach beendeter Kondensation läßt man 0,1 mol 1-Aminobenzol-3-ß-sulfatoethylsulfon in wäßriger Lösung einlaufen. Der Austausch des zweiten Fluoratom erfolgt bei pH 6-7 und 0° bis 15°, wobei gleichfalls die freiwerdene Flußsäure durch Lithiumhydroxid neutralisiert wird. Der Farbstoff wird durch Aussalzen mit 10 Volumenprozent Natriumchlorid abgeschieden. Nach dem Absaugen, Trocknen und Mahlen erhält man ein in Wasser leicht lösliches rotes Farbstoffpulver.

Der Farbstoff entspricht in Form der freien Säure der Formel

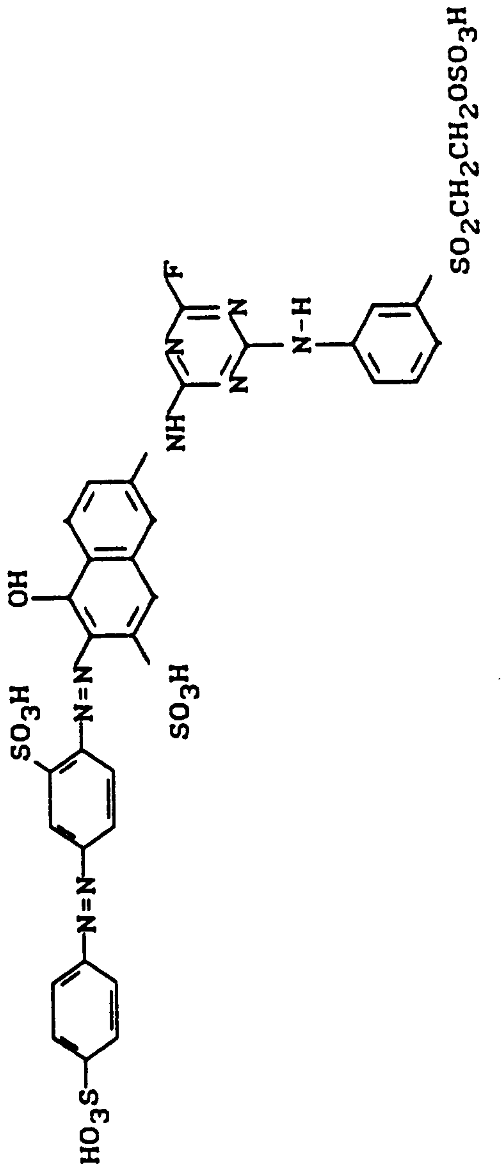

Er färbt Baumwolle nach einem der für Reaktivfarbstoffen üblichen Verfahren in klaren gelbstichig roten Tönen (Farbkennzahl 7).

Ersetzt man in Beispiel 3 das 1-Aminobenzol-3-ß-sulfatoethylsulfon durch die in Tabelle 3 genannten Amine, so erhält man gleichfalls gut wasserlösliche Reaktivfarbstoffe, die Baumwolle gelbstichig rot färben.

Tabelle 3

| Beispiel | Amin |
|---|---|
| 1 | 1-Aminobenzol-4-β-sulfatoethylsulfon |
| 2 | 1-Amin-4-methyl-benzol-3-β-sulfatoethylsulfon |
| 4 | 1-Amino-4-methoxy-benzol-3-β-sulfatoethylsulfon |
| 5 | 1-Amino-benzol-3-β-phosphatoethylsulfon |
| 6 | 1-Amino-2,5-dimethoxy-benzol-4-Vinylsulfon |
| 7 | 1-Amino-2-methyl-5-methoxy-benzol-4-β-sulfatoethylsulfon |
| 8 | 1-Aminobenzol-3-vinylsulfon |
| 9 | 2-Aminonaphthalin-6-β-sulfato-ethylsulfon-8-sulfonsäure |
| 10 | 2-Aminonaphthalin-6,8-di-β-sulfatoethylsulfon |
| 11 | 4-Ethylamino-3-(β-sulfatoethylsulfonyl)-anilin |
| 12 | 4-N-(β-Sulfatoethyl)-amino-3-(β-sulfatoethylsulfonyl)-anilin |
| 13 | 4-N-(β-Sulfoethyl)-amino-3-(β-sulfatoethylsulfonyl)-anilin |
| 14 | 3-(β-Sulfatoethylsulfonyl)-1,4-diamino-benzol |
| 15 | 4-N-[β-(4'-Sulfophenyl)-ethyl-] -amino-3-(β-sulfatoethylsulfonyl)-anilin |
| 16 | 4-[N-Methyl-N-(β-sulfoethyl)]-amino-3-(β-sulfatoethylsulfonyl )-anilin |

## Patentansprüche

**1.** Disazoreaktivfarbstoffe der allgemeinen Formel

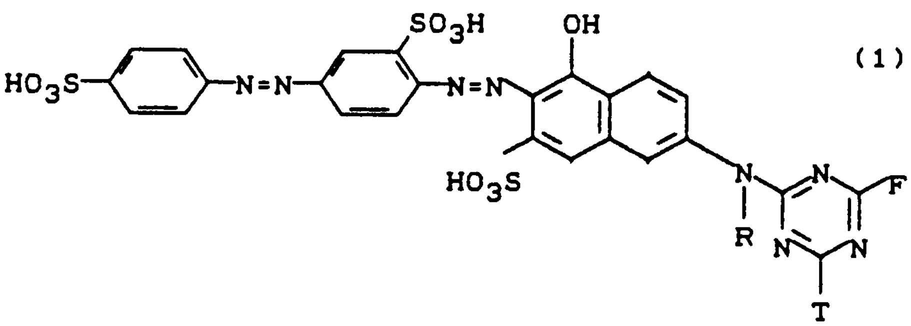

(1)

worin

R = H oder $CH_3$

T =

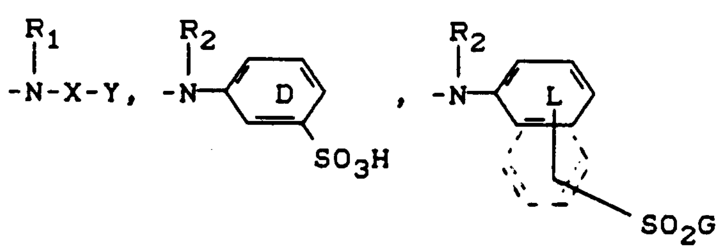

oder

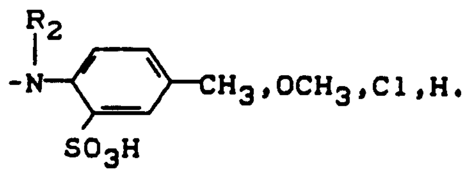

worin

R$_1$ = H, gegebenenfalls substituiertes $C_1$-$C_4$-Alkyl oder -X-Y

X = zweiwertiger aliphatischer, cycloaliphatischer, aliphatisch-cycloaliphatischer Rest oder araliphatischer Rest

Y = COOH, $SO_3H$, $OSO_3H$ oder $SO_2G$, wobei

G = $CH=CH_2$ oder $-CH_2-CH_2-Z$, wobei Z eine unter alkalischen Bedingungen abspaltbare Gruppe beudeutet

R$_2$ = H oder $C_1$-$C_4$-Alkyl und worin der Benzolrest D und der Benzol- bzw. Naphtalinrest L übliche Substituenten enthalten können.

**2.** Farbstoffe des Anspruchs 1 mit R, $R_2$ = H und G = $-CH_2=CH_2$ oder $-CH_2CH_2OSO_3H$.

**3.** Farbstoffe des Anspruchs 1 mit

T =

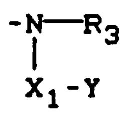

worin

R$_3$ = -H, $-C_1$-$C_4$-Alkyl, $-X_1$-Y

X$_1$ = zweiwertiger, höchstens 6-C-Atome enthaltender aliphatischer Rest, der -O-, -S-,

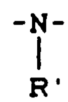

(R′ = H oder $C_1$-$C_4$-Alkyl)

enthalten kann.

**4.** Farbstoffe des Anspruchs 3 mit

Y = COOH, $SO_3H$ oder $OSO_3H$ und

X$_1$ = $-CH_2-$, $-CH_2CH_2-$,

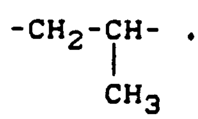

**5.** Farbstoffe aus Anspruch 3 mit

Y = $SO_2G$ und

X$_1$ = $-CH_2CH_2-$ oder $-CH_2CH_2-O-CH_2CH_2-$.

6. Verwendung der Farbstoffe der Ansprüche 1-5 zum Färben und Bedrucken von OH- oder NH-haltigen Materialien.

7. Lithiumsalze der Formel

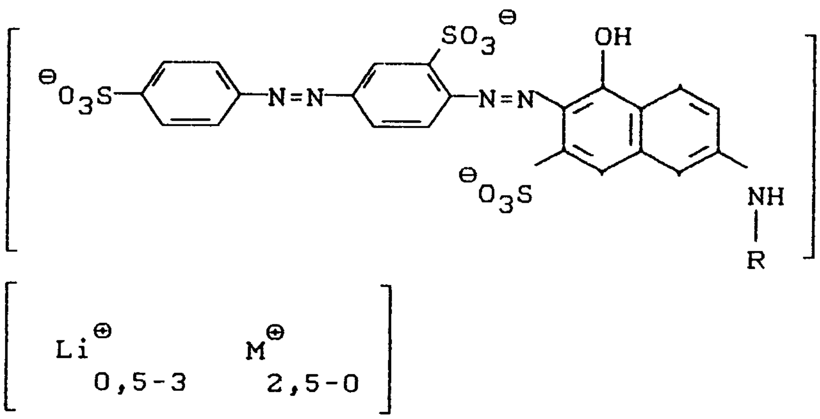

wobei R = H oder $CH_3$
wobei $M^{\oplus}$ = $Na^{\oplus}$ oder $K^{\oplus}$
$\Sigma Li^{\oplus} + M^{\oplus} = 3$ und wobei
die Kationen $M^{\oplus}$ gleich oder verschieden sein können.

**Claims**

1. Disazo reactive dyestuffs of the general formula

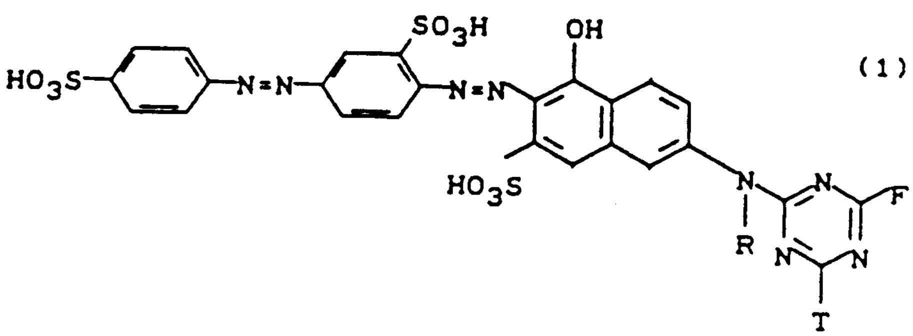

(1)

in which
R is H or $CH_3$
T is

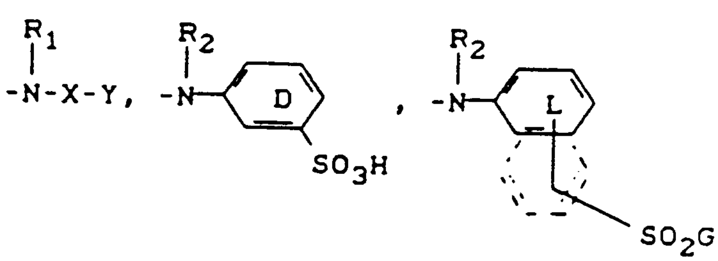

or

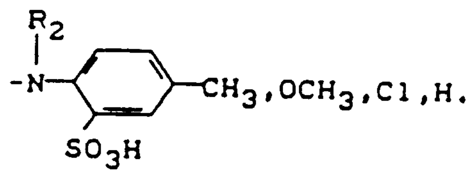

in which

- $R_1$ is H, substituted or unsubstituted $C_1$-$C_4$-alkyl or -X-Y
- X is a divalent aliphatic, cycloaliphatic, aliphatic-cycloaliphatic radical or an araliphatic radical
- Y is COOH, $SO_3H$, $OSO_3H$ or $SO_2G$, in which
- G is $CH=CH_2$ or $-CH_2-CH_2-Z$, in which Z denotes a group which can be eliminated under alkaline conditions,
- $R_2$ is H or $C_1$-$C_4$-alkyl, and the benzene radical D and the benzene or naphthalene radical L can contain customary substituents.

**2.** Dyestuffs of Claim 1, in which R, $R_2$ are H and G is $-CH_2=CH_2$ or $-CH_2CH_2OSO_3H$.

**3.** Dyestuffs of Claim 1, in which T is

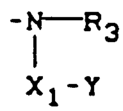

in which

- $R_3$ is -H, $-C_1$-$C_4$-alkyl, $-X_1$-Y
- $X_1$ is a divalent aliphatic radical containing a maximum of 6 C atoms and which can contain

-O-, -S-,

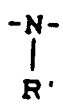

(R' is H or $C_1$-$C_4$-alkyl).

**4.** Dyestuffs of Claim 3, in which

- Y is COOH, $SO_3H$ or $OSO_3H$ and
- $X_1$ is $-CH_2-$, $-CH_2CH_2-$,

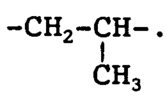

**5.** Dyestuffs from Claim 3, in which

- Y is $SO_2G$ and
- $X_1$ is $-CH_2CH_2-$ or $-CH_2CH_2-O-CH_2CH_2-$.

**6.** Use of the dyestuffs of Claims 1-5 for the dyeing and printing of OH- or NH-containing materials.

**7.** Lithium salts of the formula

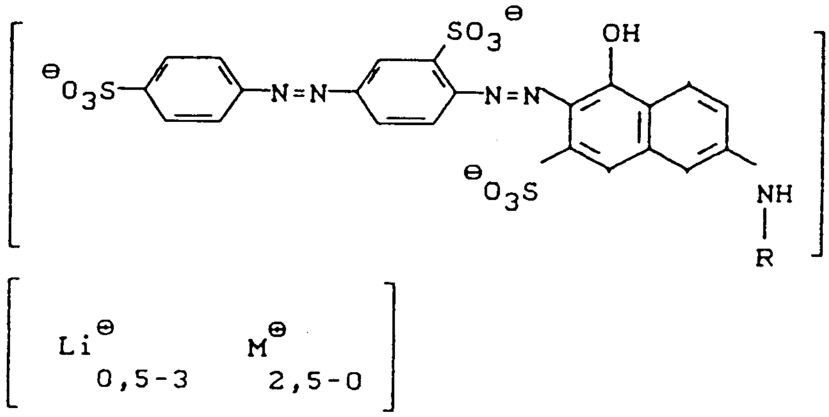

in which R is H or $CH_3$
in which $M^{\oplus}$ is $Na^{\oplus}$ or $K^{\oplus}$
the sum of $Li^{\oplus}$ + $M^{\oplus}$ is 3 and in which the cations $M^{+}$ can be identical or different.

**Revendications**

**1.** Colorants réactifs dis-azoïques de formule générale

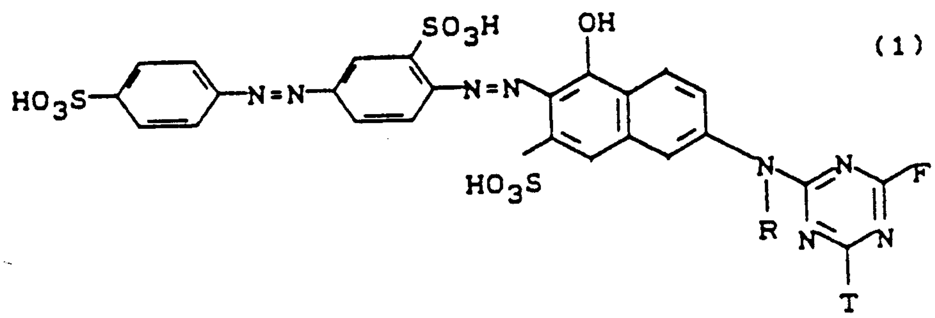

(1)

dans laquelle
R = H ou $CH_3$
T =

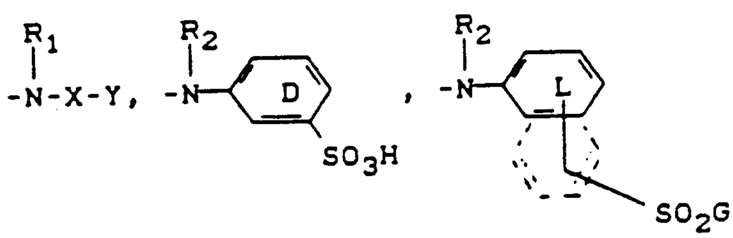

ou

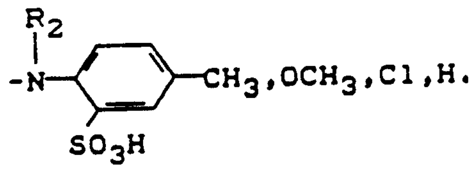

dans lesquels
$R_1$ = H, alkyle en $C_1$-$C_4$ éventuellement substitué ou -X-Y,
X = radical aliphatique, cycloaliphatique, aliphatique-cycloaliphatique ou araliphatique divalent,
Y = COOH, $SO_3H$, $OSO_3H$ ou $SO_2G$ dans lequel
G = $CH$-$CH_2$ ou -$CH_2$-$CH_2$-Z, Z représentant un groupe scindale en milieu alcalin,
$R_2$ = H ou alkyle en $C_1$-$C_4$,
et dans laquelle le radical benzénique D et le radical benzénique ou naphtalénique L peuvent porter des substituants usuels.

2. Colorants de la revendication 1, pour lesquels R, $R_2$ = H et G = $CH_2 = CH_2$ ou -$CH_2CH_2OSO_3H$.

3. Colorants de la revendication 1, pour lesquels
T =

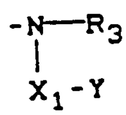

avec
$R_3$ = -H, alkyle en $C_1$-$C_4$, -$X_1$-Y
$X_1$ = radical aliphatique divalent contenant au maximum 6 atomes de carbone et qui peut contenir -O-, -S-,

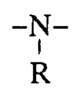

(R' = H ou alkyle en $C_1$-$C_4$)

4. Colorants de la revendication 3, pour lesquels
Y = COOH, $SO_3H$ ou $OSO_3H$ et
$X_1$ = -$CH_2$-, -$CH_2CH_2$-,

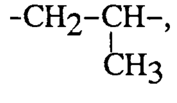

5. Colorants de la revendication 3, pour lesquels
Y = $SO_2G$ et
$X_1$ = -$CH_2CH_2$- ou -$CH_2CH_2$-O-$CH_2CH_2$.

6. Utilisation des colorants des revendications 1 à 5 pour la teinture et l'impression de matières contenant des groupes OH ou NH.

**7.** Sels de lithium de formule

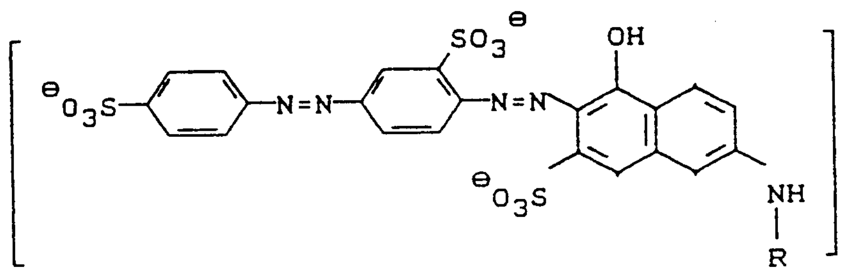

$$\left[ Li^{\ominus}_{0,5-3} \quad M^{\ominus}_{2,5-0} \right]$$

dans laquelle R = H ou $CH_3$,
$M^{\oplus}$ = $Na^{\oplus}$ ou $K^{\oplus}$
$\Sigma Li^{\oplus} + M^{\oplus} = 3$,
les cations $N^{\oplus}$ pouvant être identiques ou différents.